# EUROPÄISCHE PATENTSCHRIFT

(11) **EP 1 606 474 B1**
(45) Veröffentlichungstag und Bekanntmachung des Hinweises auf die Patenterteilung: **30.12.2009**
(21) Anmeldenummer: 04706601.4
(22) Anmeldetag: 30.01.2004
(51) Int. Cl.: E04F 15/04, E04F 15/08, F16B 5/00, F16B 12/24, E04F 13/08

(54) **EINRICHTUNG ZUM VERBINDEN VON BAUPLATTEN, INSBESONDERE BODENPANEELE**
DEVICE FOR CONNECTING BUILDING BOARDS, ESPECIALLY FLOOR PANELS
DISPOSITIF POUR ASSEMBLER DES PANNEAUX DE CONSTRUCTION, NOTAMMENT DES PANNEAUX DE REVETEMENT DE SOL

(30) Priorität: 24.03.2003 DE 20304761 U
(43) Veröffentlichungstag der Anmeldung: 21.12.2005
(73) Patentinhaber: Flooring Technologies Ltd., Pieta MSD 08 (MT)
(72) Erfinder: GRAFENAUER, Thomas, F-45570 Onzour sur Loire (FR); LEWARK, Matthias, 16766 Kremmen (DE)
(74) Vertreter: Rehmann, Thorsten
(86) Internationale Anmeldenummer: PCT/DE2004/000148
(87) Internationale Veröffentlichungsnummer: WO 2004/085765

(56) Entgegenhaltungen:
- WO-A-00/20705
- DE-A- 3 932 980
- FR-A- 2 209 024
- FR-A1- 2 810 060
- US-A- 3 627 362
- US-A- 5 247 773

## Beschreibung

Die Erfindung betrifft eine Einrichtung bestehend aus Paneelen und einem Einsatz zum Verbinden und Verriegeln von Paneelen mit einer Oberseite und einer Unterseite, die an mindestens zwei sich gegenüberliegenden Seitenkanten mit jeweils nur einer einzigen Nut versehen sind und jede Nut eine Unterlippe aufweist, mit einem zur Verriegelung zumindest in Querrichtung Q vorgesehenen Einsatz, der aus einem sich in Querrichtung Q erstreckenden Kern gebildet ist, der in die Nut einer der Seitenkanten eingesetzt ist und von dem an jedem Ende eine zur Unterseite gerichtete federnde Lippe absteht, die sich zurück in Richtung der Mitte des Kerns erstreckt, der außerdem mittig zwischen den federnden Lippen einen Vorsprung aufweist, der sich auf einem parallel zur Unterseite verlaufenden Absatz der Unterlippe der Nut abstützt und jede federnde Lippe eine Spitze aufweist, die zur Verriegelung mit einer schräg verlaufenden Kante zusammenwirkt, wobei das Verbinden der Platten durch im Wesentlichen horizontales Verschieben aufeinander zu erfolgt.

Eine solche Einrichtung ist beispielsweise aus der FR-A-2 209 024 bekannt.

Aus der DE-A-39 32 980 sind Kunststoffschaumplatten bekannt, die durch Nut und Feder zu selbsttragenden Wänden und Decken zusammengesetzt werden können. Die sich gegenüberliegenden Seitenkanten sind mit einer Nut versehen, die eine Oberlippe und eine Unterlippe ausbildet. Sowohl in der Unterlippe als auch in der Oberlippe ist eine sich über die volle Länge der Platte erstreckende Vertiefung vorgesehen. Die Federn sind als separate Einsätze mit einer Mehrzahl von Widerhaken versehen, die in die Nuten eingreifen.

Aus der WO 00/20705 ist eine gattungsgemäße Einrichtung zum Verbinden und Verriegeln bekannt, bei der der Einsatz an seinen beiden äußeren Enden einen nach oben vorspringenden Widerhaken mit einer geraden Verriegelungsfläche aufweist, die in eine Vertiefung in der Oberlippe der Nut eingreift, die ebenfalls mit einer senkrecht verlaufenden Verriegelungsfläche versehen ist.

Aus der DE-A-100 34 409 ist ebenfalls eine Einrichtung zum Verbinden und Verriegeln von Bodenpaneelen mit einem Kern aus Holzwerkstoff mittels eines Kunststoffeinsatzes bekannt. An dem Einsatz sind spiegel-symmetrisch zu seiner Mitte eine Mehrzahl von Widerhaken ausgebildet. Die Widerhaken sind zueinander entgegengerichtet. Der Einsatz wird in eine der Nuten eingelegt und zur Verbindung dann die Nut des anderen Paneels mit dem Einsatz verbunden. Der Kern des Einsatzes entspricht der Nuthöhe. Die Widerhaken stehen über den Kern hinaus. Die Verriegelung erfolgt kraftschlüssig, indem die Widerhaken in der Nut zusammengedrückt werden. Damit sich miteinander verbundene Platten nicht lösen können, müssen die Klemmkräfte hoch sein. Das bedeutet, dass auch hohe Fügekräfte notwendig sind, die insbesondere beim Zusammenfügen von Bodenpaneelen nur aufgebracht werden können, wenn die Paneele mit Hammerschlägen zusammengeschlagen werden. Hierbei besteht grundsätzlich die Gefahr, dass der letzte Schlag zu fest ausgeführt wird und die Seitenkante des Paneels dann beschädigt wird. Bei Bodenpaneelen ist eine Beschädigung an den Seitenkanten kritisch, weil diese möglicherweise unentdeckt bleibt und dann an der Verbindungsfuge keine absolute Dichtheit erhalten werden kann. An solchen Stellen kann Feuchtigkeit in den Kern des Paneels eindringen. Bei einem Laminat-Paneel besteht der Kern aus einem Holzwerkstoff, der in diesem Fall aufquellen kann und der Fußboden wird dadurch zerstört.

Von dieser Problemstellung ausgehend soll eine eingangs beschriebene Einrichtung zum Verbinden und Verriegeln geschaffen werden, die einfach gehandhabt werden kann und kostengünstig in der Herstellung ist.

Zur Problemlösung zeichnet sich die gattungsgemäße Einrichtung dadurch aus, dass die Paneele Bodenpaneele mit einem Kern aus Holzwerkstoff sind, und dass bei miteinander verbundenen Bodenpaneelen der Einsatz in seiner Umfangskontur im Wesentlichen vollständig von dem Kernmaterial der Paneele umgeben und nur der Bereich innerhalb der federnden Lippen zu einem quer verlaufenden Steg des Einsatzes ausgenommen ist.

Der Einsatz wird in die Nut an einer Seite eingelegt. Das neu zu verbindende Paneel wird auf den Einsatz aufgeschoben, wodurch die federnde Lippe zusammengedrückt wird. Zum Verriegeln federt die Lippe dann zurück, wenn Sie mit der Verriegelungsnut zur Überdeckung gelangt. Durch die mit der schräg verlaufenden Kante zusammenwirkende Spitze der federnden Lippe wird die Verbindung formschlüssig und im Grunde genommen unlösbar. Dadurch, dass der Einsatz symmetrisch ausgebildet ist, können die Herstellkosten reduziert werden.

Der Einsatz ist kostengünstig herstellbar, wenn er aus Kunststoff besteht. Zur Einsparung von Material und zur Erhöhung von Federeigenschaften ist es vorteilhaft, wenn der Einsatz in seinem Kern mindestens eine Höhlung aufweist. Insbesondere vorteilhaft ist es, wenn der Einsatz eine Vielzahl von Höhlungen aufweist.

Wenn der Einsatz mittig zwischen den federnden Lippen einen Vorsprung aufweist, der sich auf einem parallel zur Unterseite verlaufenden Absatz der Unterlippe der Nuten abstützt, wird eine sichere Verbindung bzw. Verriegelung der Paneele erreicht, weil eine Ausbiegung des Einsatzes durch eine Verdrehbewegung der Paneele vermieden wird.

Um eine passgenaue Verbindung der Platten auch in der zur Verbindungsrichtung senkrecht verlaufenden Richtung (bei Bodenplatten die vertikale Richtung) zu erhalten, ist die Platte an einer Seitenkante mit einer im Wesentlichen in Querrichtung weisenden Feder und an der anderen Seitenkante mit einer hierzu korrespondierenden Nut versehen. Die Nuten, in die der Einsatz eingelegt wird, können in der Unterlippe der Nut bzw. der Unterseite der Feder ausgebildet sein.

Um beim Zusammenfügen zweier Platten ein Verkanten zu vermeiden, sind die Seitenkanten des Einsatzes nach außen verjüngt. Sie können abgerundet oder spitz zulaufend ausgerichtet sein. Eine spitz zulaufende Ausgestaltung hat den Vorteil, dass sich beim Verbinden die Platten zueinander ausrichten.

Vorteilhaft ist es, wenn der Einsatz werkseitig in eine Nut eingesetzt ist und insbesondere vorteilhaft unlösbar mit ihr verbunden ist. Die Handhabung der Platten beim Verlegen wird dadurch vereinfacht. Zur unlösbaren Verbindung kann der Einsatz mit der Nut verklebt sein.

Vorzugsweise beträgt der Neigungswinkel α zwischen der schräg verlaufenden Kante zwischen 90° und 135°. Die Stärke (Dicke) des Einsatzes beträgt vorzugsweise 1,5 - 5 mm.

Eine gute Haltbarkeit der Verbindung hat sich erwiesen, wenn die Eindringtiefe des Einsatzes in die Nut 3 - 8 mm beträgt.

Vorteilhaft ist es, wenn der Biegemodul des Kunststoffes, aus dem der Einsatz gefertigt wird, 1000 - 7000 N/mm² beträgt.

Da die Oberlippe und die Unterlippe der Nuten, in die der Einsatz eingesetzt wird, in derselben vertikalen Ebene enden, ist es vorteilhaft, wenn diese mit einem feststehenden Werkzeug geschnitten werden, an dem die Platten vorbeigeführt werden. Dadurch können die Hinterschnitte, die die Verriegelung bewirken, kostengünstig erzeugt werden.

Mit Hilfe einer Zeichnung soll nachfolgend ein Ausführungsbeispiel der Erfindung näher erläutert werden.

Es zeigt
- Figur 1: die Seitenansicht an der Verbindungsstelle zweier miteinander verriegelter Paneele;
- Figur 2: die Seitenkanten der Paneele nach Figur 1 in nicht verriegeltem Zustand;
- Figur 3: einen ersten, nicht erfindungsgemäß ausgebildeten Einsatz;
- Figur 4: die Seitenansicht an der Verbindungsstelle zweier miteinander verriegelter Paneele;
- Figur 5: die Seitenkanten der Paneele nach Figur 4 in nicht verriegeltem Zustand;
- Figur 6: den Einsatz nach Figur 3 in Einzeldarstellung;
- Figur 7: die Seitenansicht an der Verbindungsstelle zweier miteinander verriegelter Paneele;
- Figur 8: die Seitenkanten der Paneele nach Figur 7 in nicht verriegeltem Zustand;
- Figur 9: den Einsatz in Einzeldarstellung;
- Figur 10: die Seitenansicht an der Verbindungsstelle zweier miteinander verriegelter Paneele;
- Figur 11: die Seitenkanten der Paneele nach Figur 10 in nicht verriegeltem Zustand;
- Figur 12: einen zweiten, nicht erfindungsgemäß ausgebildeten Einsatz;
- Figur 13: die Seitenansicht an der Verbindungsstelle zweier miteinander verriegelter Paneele;
- Figur 14: die Seitenkanten der Paneele nach Figur 13 in nicht verriegeltem Zustand;
- Figur 15: einen dritten, nicht erfindungsgemäß ausgebildeten Einsatz;
- Figur 16: einen Einsatz nach der Erfindung;
- Figur 17: die Seitenkanten der zur Verbindung mit dem Einsatz gemäß Figur 16 vorgesehenen Paneele;
- Figur 18: die Seitenkanten der Paneele nach Figur 17 in verriegeltem Zustand;
- Figur 19: eines der Paneele mit einer vergrößerten Ausschnittdarstellung.

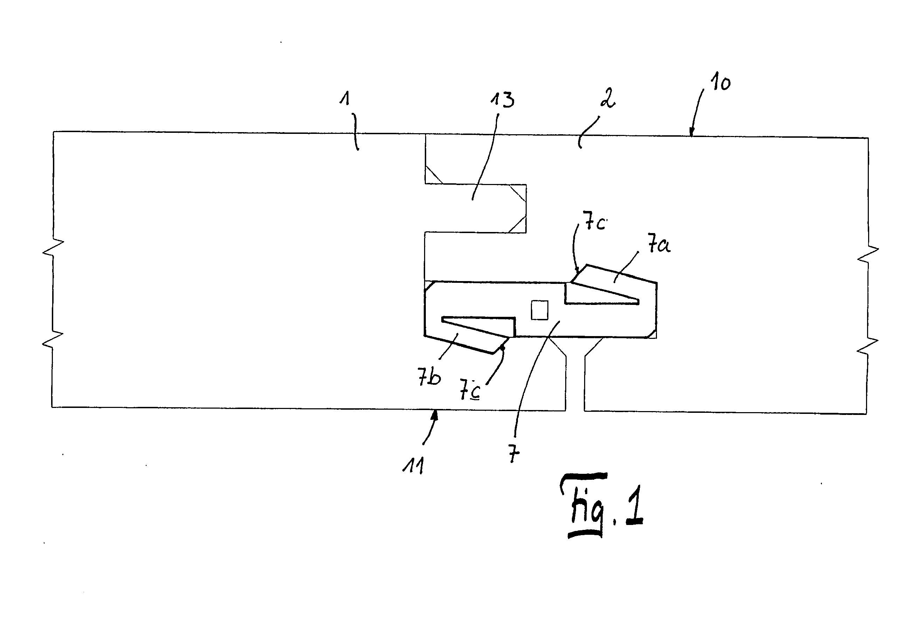

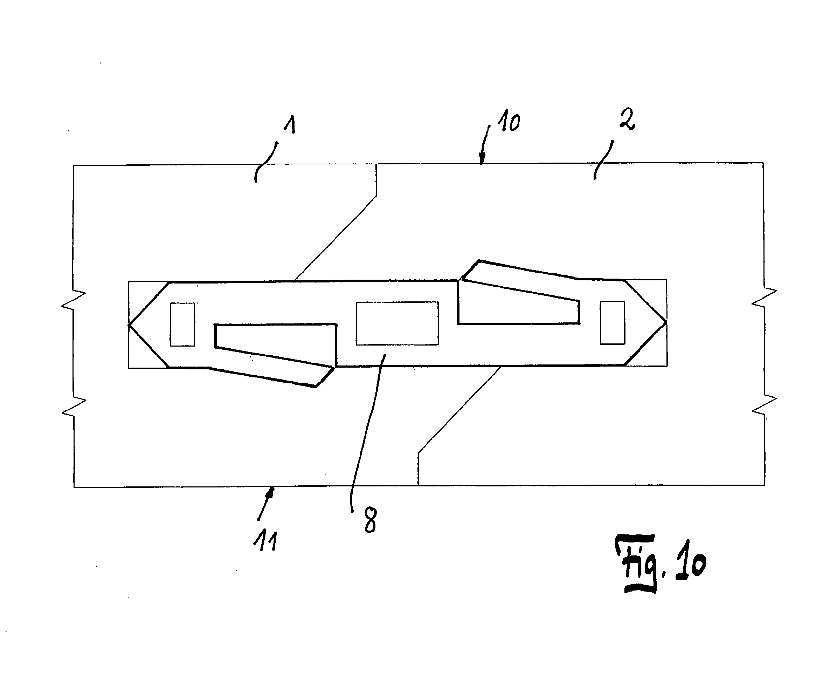

Figuren 1 bis 15 zeigen Einsätze, die nicht erfindungsgemäß ausgebildet sind.

Die aus einem Kern aus Holzwerkstoff, vorzugsweise MDF oder HDF, bestehenden Laminat-Paneele 1, 2 sind an ihren Seitenkanten I, II mit einer Feder 13 und einer Nut 14 versehen. Unterhalb der Unterlippe 14' der Nut 14 ist das Material des Paneels 2 bis zur Unterseite 11 weggefräst. Unterhalb der Feder 13 ist an der gegenüberliegenden Seitenkante I eine Nut 15 mit einer Unterlippe 15 a ausgebildet. Die Unterlippe 15a ist an ihrer zur Feder 13 gerichteten Seite mit einer Nut 3 versehen, die eine schräg verlaufende Kante 3a aufweist. Die Unterseite der Unterlippe 14a an der gegenüberliegenden Seitenkante II ist ebenfalls mit einer Nut 4 versehen, die eine schräg verlaufende Kante 4a aufweist.

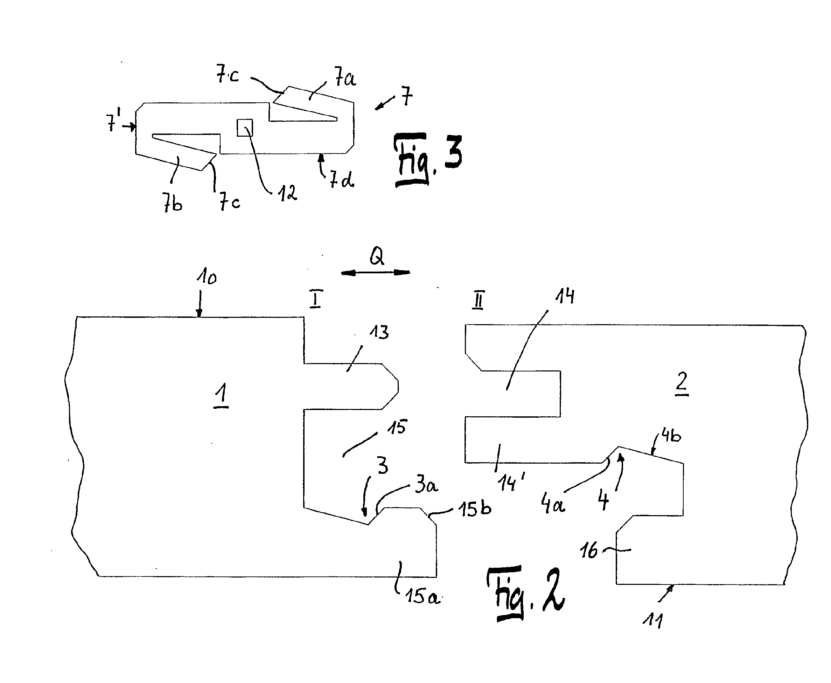

Der zur Verriegelung dienende Einsatz 7 ist, wie Figur 3 zeigt, mit zwei gegensinnig wirkenden federnden Lippen 7a, 7b versehen, die mit einer schräg verlaufenden Spitze 7c versehen sind. Der Einsatz 7 ist zu zwei Hauptachsen symmetrisch ausgebildet. Mittig ist er mit einer Höhlung 12 versehen.

Zum Verbinden der beiden Paneele 1, 2 wird der Einsatz 7 zunächst mit der federnden Lippe 7a in die Nut 4 eingelegt, wo er sich mit der Spitze 7c an der schräg verlaufenden Kante 4a und mit seiner Unterseite 7d an der weiteren Unterlippe 16 abstützt. Zur sicheren Fixierung kann der Einsatz 7 festgeklebt werden.

Die Paneele 1, 2 werden nun horizontal in Querrichtung Q aufeinander zugeschoben. Wenn die Spitze 7' in die Nut 15 gelangt, läuft die Unterseite der federnden Lippe 7b an der Anlaufschräge 15b der Unterlippe 15a an, und die federnde Lippe 7b wird zusammengedrückt. Wenn die Paneele 1, 2 ausreichend weit zusammengeschoben sind, gelangt die federnde Lippe 7b in Einfluss der Nut 3 und federt zurück. Ihre Spitze 7c greift in die Nut ein und verriegelt mit der schrägen Kante 3a. In Querrichtung Q sind die Paneele 1, 2 über den Einsatz verriegelt. In vertikaler Richtung erfolgt die Führung und Verriegelung unterstützend über die Feder 13 bzw. die Nut 14.

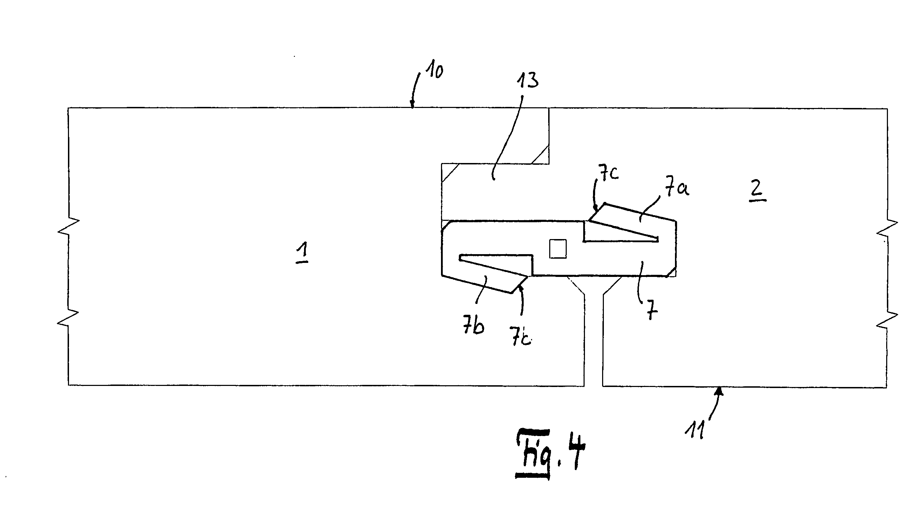

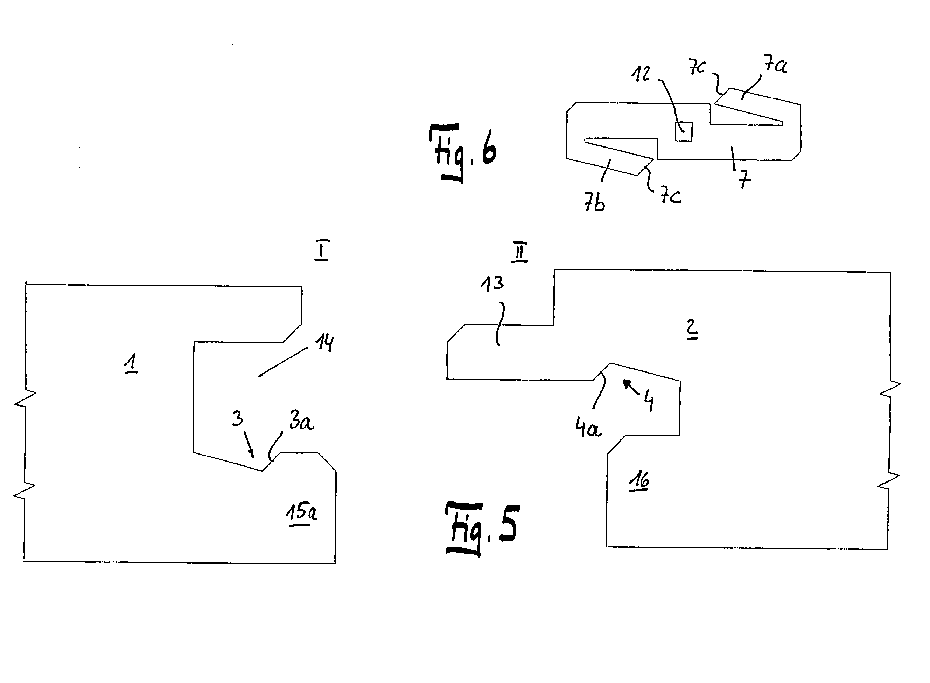

Die in Figuren 4 und 5 gezeigten Paneele 1, 2 sind an den Seitenkanten I, II mit einer etwas anders ausgestalteten Profilierung der Feder 13 und der Nut 14 versehen. Die Verriegelung erfolgt über einen identisch ausgebildeten Einsatz 7, wie Figur 6 zeigt.

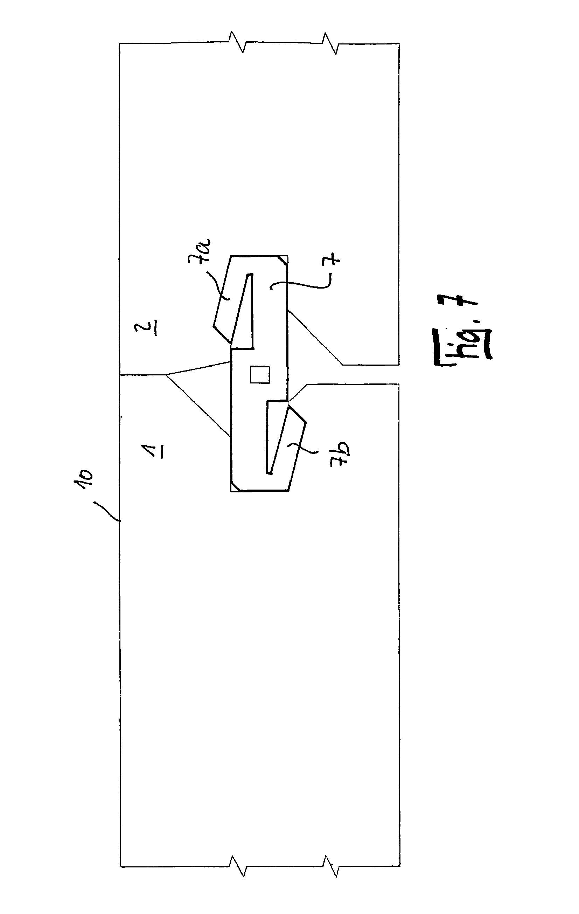

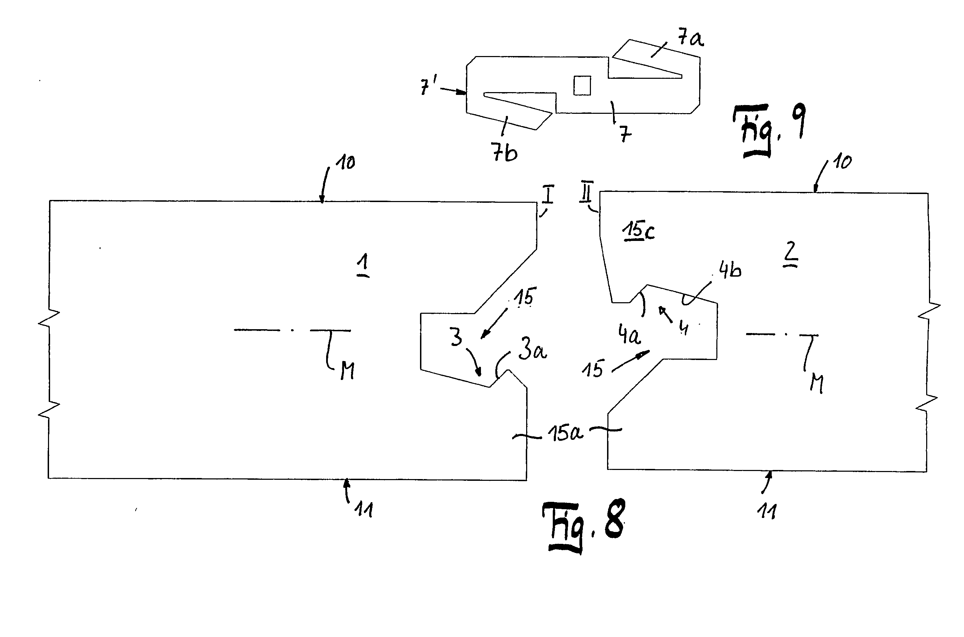

Die in Figuren 7 und 8 gezeigten Paneele 1, 2 sind an ihren gegenüberliegenden Seitenkanten I, II mit identischen Nuten 15 ausgebildet, die um die Mittelachse M gespiegelt sind. Die Nuten 3, 4 zur Verriegelung sind an der Unterlippe 15a bzw. der Oberlippe 15c der Nuten 15 ausgebildet. Die Verriegelung erfolgt mit dem bereits beschriebenen Verriegelungselemente 7, wie Figur 9 zeigt.

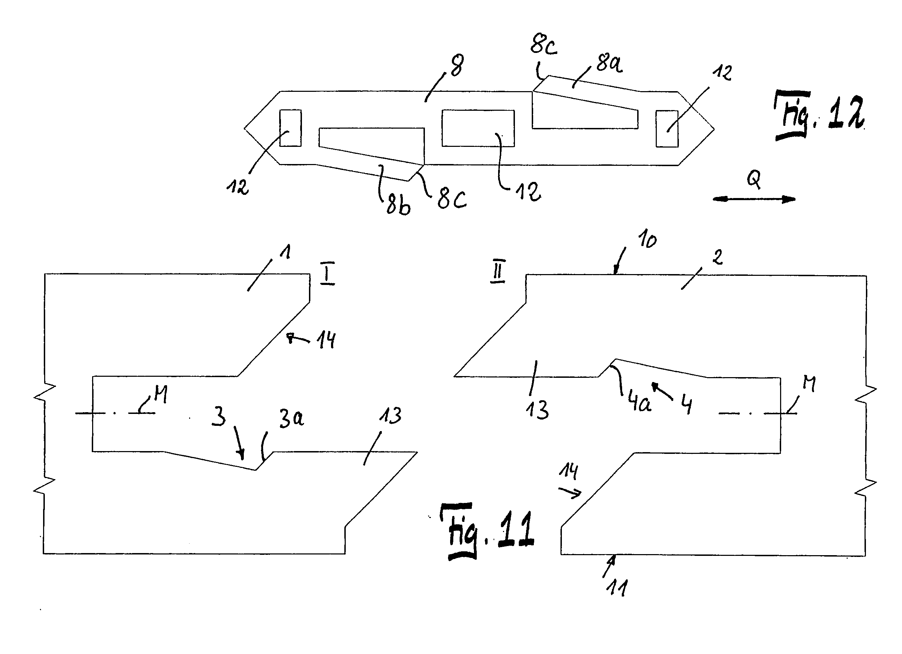

Figur 12 zeigt einen weiteren Einsatz 8. Dieser Einsatz 8 ist ebenfalls in zwei Hauptachsen symmetrisch und mit gegensinnig wirkenden federnden Lippen 8a, 8b versehen, die jeweils eine schräg verlaufende Spitze 8c aufweisen.

An den Seitenkanten läuft der Einsatz 8 zugespitzt. Die Paneele 1, 2 (Figur 11) sind mit identisch ausgestalteten, um die Mittelachse M gespiegelten Nuten 14 versehen. Die Federn 13 bilden an der einen Seitenkante I die Unterlippe und an der gegenüberliegenden Seitenkante die Oberlippe der Nut 14.

Die Nuten 3, 4 zur Verriegelung sind in der Feder 13 vorgesehen. Das Verriegelungsprinzip entspricht dem Vorstehend beschriebenen. Der Einsatz 8 wird in eine der Nuten eingesetzt und darin fixiert. Durch Verschieben in Querrichtung werden die beiden Paneele dann miteinander verbunden.

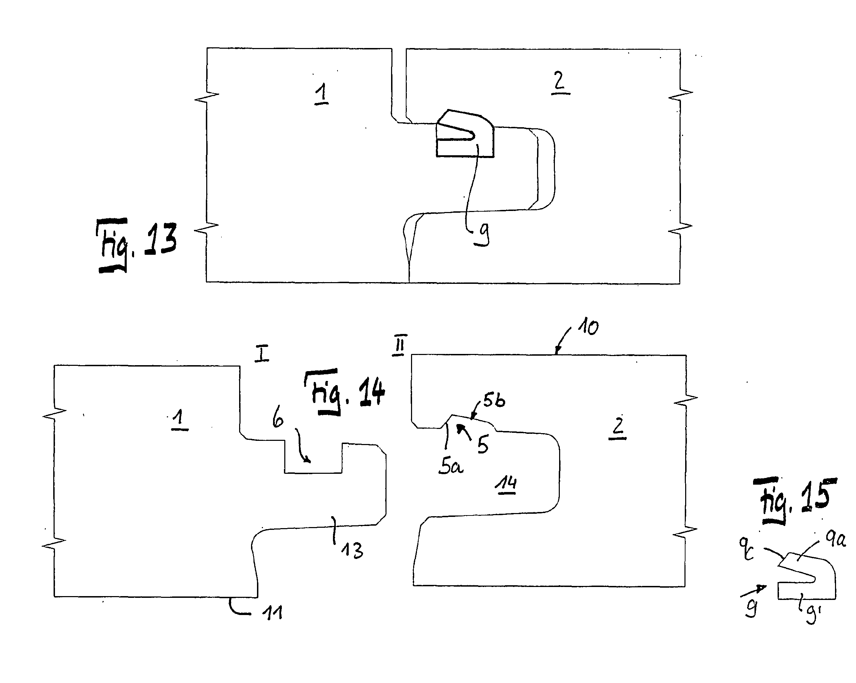

Anhand der Figuren 13 - 15 wird nun ein drittes Ausführungsbeispiel eines Einsatzes 9 beschrieben. Der Einsatz 9 weist eine federnde Lippe 9a auf, die eine schräg verlaufende Spitze 9c aufweist.

An der einen Seitenkante I ist das Paneel 1 mit einer Feder 13 versehen, die an ihrer Oberseite mit einer an ihrem Querschnitt rechteckigen Nut 6 versehen ist. An der gegenüberliegenden Seitenkante II ist eine Nut 14 in das Paneel 2 eingefräst. Die Nut 14 weist an der Unterseite ihrer Oberlippe eine Nut 5 mit einer schrägen Kante 5a auf.

Die untere Lippe 9' des Einsatzes 9 ist im Querschnitt der Nut 6 angepasst. Der Einsatz 9 wird in die Nut 6 eingesetzt und durch Relativverschiebung der Paneele 1, 2 aufeinander zu erfolgt die Verbindung. Die Oberlippe 9a des Einsatzes 9 verläuft wie bei den zuvor beschriebenen Einsätzen 7, 8 auch gegenüber der Oberseite 10 des Paneels 1, 2 geneigt. Der Neigungswinkel der Oberseite der federnden Lippe 9a entspricht dem Neigungswinkel der der Kante 5a sich anschließenden Kante 5b der Nut 5. Gelangt die federnde Lippe 9a in Überdeckung mit der Nut 5 federt sie wieder aus und die Spitze 9c greift hinter die schräge Kante 5a, wodurch die Verriegelung erfolgt ist. Die vertikale Verriegelung erfolgt über die Feder 13 bzw. die Nut 14.

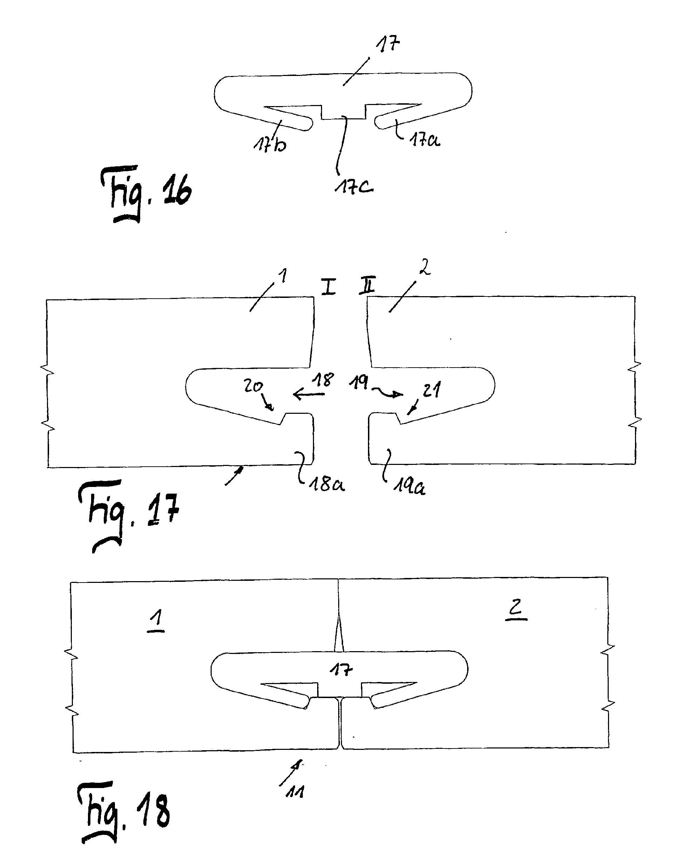

Die Figuren 16 - 19 verdeutlichen ein weiteres Ausführungsbeispiel der Einrichtung. Die Paneele 1, 2 sind an ihren gegenüberliegenden Seitenkanten I, II mit spiegelverkehrt ausgestalteten Nuten 18, 19 versehen, deren Oberlippe und Unterlippe 18a, 19a in einer vertikalen Ebene enden. Der Einsatz 17 besteht aus Kunststoff und weist an seinen äußeren Enden schräg nach unten verlaufende, federnde Lippen 17a, 17b auf, deren Enden abgerundet sind. Aus dem Kern des Einsatzes 17 heraus ragt zwischen den federnden Lippen 17a, 17b ein Vorsprung 17c mit einer parallel zur Oberseite des Einsatzes 17 verlaufenden Fläche.

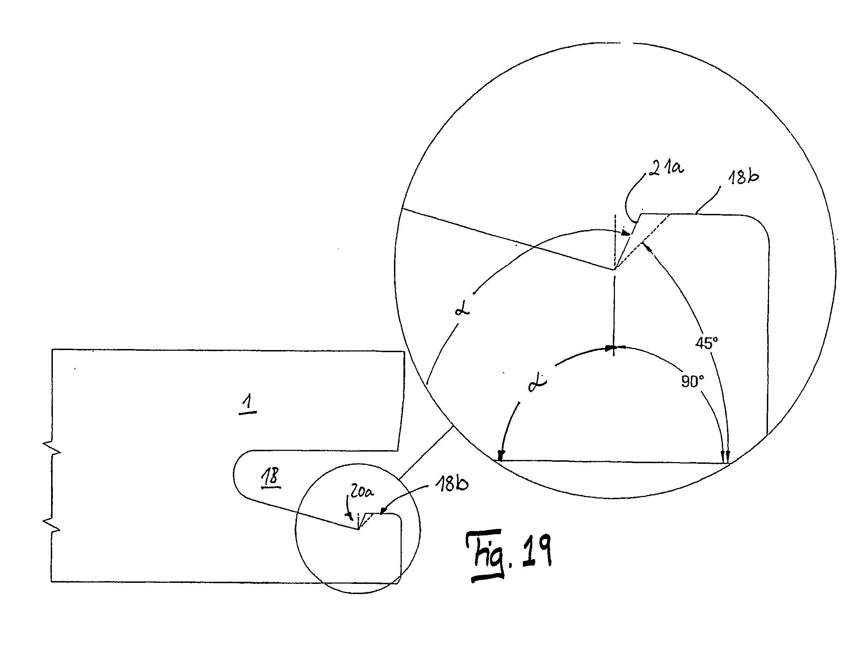

Figur 18 zeigt, dass der Einsatz 17 bei miteinander verbundenen Paneelen 1, 2 im wesentlichen vollständig vom Kernmaterial der Paneele 1, 2 umgeben ist, wobei nur der Bereich innerhalb der federnden Lippen 17a, 17b zum quer verlaufenden Steg des Einsatzes 17 ausgenommen ist. Die schräg verlaufende Kante 20a, 21 a, die in der Vertiefung 20, 21 ausgebildet ist, um den Einsatz 17 über die Lippen 17a, 17b verriegeln zu können, verläuft in einem Winkel von 90° - 135° zur Unterseite 11 geneigt (werden die Innenmaße ermittelt, wie dies in der vergrößerten Darstellung in Figur 19 dargestellt ist, beträgt der Neigungswinkel 90° - 45°. Der Vorsprung 17c stützt sich auf dem parallel zur Unterseite 11 verlaufenden Steg 18b, 19b der Unterlippe 18a, 19a ab.

Eine gute Haltbarkeit der Verbindung ist gegeben, wenn die Eindringtiefe des Einsatzes 7 in die Nuten 18, 19, 3 - 8 mm beträgt. Der Biegemodul des Einsatzes beträgt 1000 - 7000 N/mm².

Die Oberlippe und die Unterlippen 18a, 19a der Nuten 18, 19 enden in derselben vertikalen Ebene. Um den Hinterschnitt durch die Vertiefung 20, 21 auszubilden, ist es vorteilhaft, wenn ein feststehendes Messer verwendet wird, an dem die Platten 1, 2 vorbeigeführt werden. Die Nuten 18, 19 werden also nicht gefräst, sondern geschnitten. Die Herstellung wird dadurch vereinfacht und kostengünstiger.

### Bezugszeichenliste

- 1: Platte, Bodenpaneel
- 2: Platte, Bodenpaneel
- 3: Nut
- 3a: schräge Kante
- 4: Nut
- 4a: schräge Kante
- 4b: schräge Kante
- 5: Nut
- 5a: schräge Kante
- 5b: schräge Kante
- 6: Nut
- 7: Einsatz
- 7a: federnde Lippe
- 7b: federnde Lippe
- 7c: Spitze
- 7d: Unterseite
- 7': Spitze
- 8: Einsatz
- 8a: federnde Lippe
- 8b: federnde Lippe
- 8c: Spitze
- 9: Einsatz
- 9a: federnde Lippe
- 9c: Spitze
- 9': Unterlippe
- 10: Oberseite
- 11: Unterseite
- 12: Höhlung
- 13: Feder
- 14: Nut
- 14': Unterlippe
- 15: Nut
- 15a: Unterlippe
- 15b: Anlaufschräge
- 15c: Oberlippe
- 16: Unterlippe
- 17: Einsatz
- 17a: federnde Lippe
- 17b: federnde Lippe
- 17c: Vorsprung
- 18: Nut
- 18a: Unterlippe
- 18b: Steg
- 19: Nut
- 19a: Unterlippe
- 19b: Steg
- 20: Nut
- 20a: Schräge
- 21: Nut
- 21 a: Schräge
- I: Seitenkante
- II: Seitenkante
- M: Mittelachse
- Q: Querrichtung Neigungswinkel

## Patentansprüche

1. Einrichtung bestehend aus Paneelen und einem Einsatz zum Verbinden und Verriegeln von Paneelen (1, 2) mit einer Oberseite (10) und einer Unterseite (11), die an mindestens zwei sich gegenüberliegenden Seitenkanten (I, II) mit jeweils nur einer einzigen Nut (18, 19) versehen sind und jede Nut (18, 19) eine Unterlippe (18a, 19a) aufweist, mit einem zur Verriegelung zumindest in Querrichtung Q vorgesehenen Einsatz (17), der aus einem sich in Querrichtung Q erstreckenden Kern gebildet ist, der in die Nut (18 oder 19) einer der Seitenkanten (I, II) eingesetzt ist und von dem an jedem Ende eine zur Unterseite gerichtete federnde Lippe (17a, 17b) absteht, die sich zurück in Richtung der Mitte des Kerns erstreckt, der außerdem mittig zwischen den federnden Lippen (17a, 17b) einen Vorsprung (17c) aufweist, der sich auf einem parallel zur Unterseite (11) verlaufenden Absatz (18b, 19b) der Unterlippe (18a, 19a) der Nut (18, 19) abstützt und jede federnde Lippe (17a, 17b) eine Spitze aufweist, die zur Verriegelung mit einer schräg verlaufenden Kante zusammenwirkt, wobei das Verbinden der Platten (1, 2) durch im Wesentlichen horizontales Verschieben (Richtung Q) aufeinander zu erfolgt, **dadurch gekennzeichnet, dass** die Paneele (1, 2) Bodenpaneele mit einem Kern aus Holzwerkstoff sind, und dass bei miteinander verbundenen Bodenpaneelen (1, 2) der Einsatz (17) in seiner Umfangskontur im Wesentlichen vollständig von dem Kernmaterial der Paneele (1, 2) umgeben und nur der Bereich innerhalb der federnden Lippen (17a, 17b) zu einem quer verlaufenden Steg des Einsatzes (17) ausgenommen ist.

2. Einrichtung nach Anspruch 1, **dadurch gekennzeichnet, dass** die Spitze zur Oberseite (10) bzw. Unterseite (11) schräg verläuft.

3. Einrichtung nach Anspruch 1 oder 2, **dadurch gekennzeichnet, dass** der Einsatz (17) aus Kunststoff besteht.

4. Einrichtung nach Anspruch 2, **dadurch gekennzeichnet, dass** der Neigungswinkel α zwischen der schräg verlaufenden Kante (20a; 21 a) zwischen 90° und 135° beträgt.

5. Einrichtung nach einem oder mehreren der vorstehenden Ansprüche, **dadurch gekennzeichnet, dass** die Stärke des Einsatzes (17) 1,5 - 5 mm beträgt.

6. Einrichtung nach einem oder mehreren der vorstehenden Ansprüche, **dadurch gekennzeichnet, dass** die Eindringtiefe des Einsatzes (17) in die Nut (18, 19) 3 - 8 mm beträgt.

7. Einrichtung nach Anspruch 3, **dadurch gekennzeichnet, dass** der Biegemodul des Kunststoffes 1000 - 7000 N/mm² beträgt.

8. Einrichtung nach Anspruch 1, **dadurch gekennzeichnet, dass** die Platte (1, 2) an einer Seitenkante (I) mit einer im wesentlichen in Querrichtung (Q) weisenden Feder (13) und an der anderen Seitenkante (II) mit einer hierzu korrespondierenden Nut (14) versehen ist.

9. Einrichtung nach Anspruch 8, **dadurch gekennzeichnet, dass** die Seitenkanten des Einsatzes (17) gerundet sind.

10. Einrichtung nach einem oder mehreren der vorstehenden Ansprüche, **dadurch gekennzeichnet, dass** der Einsatz (17) werkseitig in eine Nut (18, 19) eingesetzt ist.

11. Einrichtung nach Anspruch 10, **dadurch gekennzeichnet, dass** der Einsatz (17) unlösbar mit der einen Nut (18, 19) verbunden ist.

12. Einrichtung nach Anspruch 11, **dadurch gekennzeichnet, dass** der Einsatz (17) verklebt ist.

13. Einrichtung nach Anspruch 1, **dadurch gekennzeichnet, dass** die Nuten (18, 19) mit einem feststehenden Werkzeug geschnitten werden, an dem die Bodenpaneele (1, 2) vorbeigeführt werden.

## Claims

1. Device comprising panels and an insert for connecting and locking panels (1, 2) having an upper side (10) and a lower side (11), said panels being provided with only a single groove (18, 19) in each case on at least two opposite side edges (I, II), and each groove (18, 19) having a lower lip (18a, 19a), with an insert (17) which is provided for locking at least in the transverse direction Q and is formed from a core which extends in the transverse direction Q, is inserted into the groove (18 or 19) in one of the side edges (I, II) and from which at each end a resilient lip (17a, 17b) protrudes, said resilient lip being directed towards the lower side and extending back in the direction of the centre of the core which also has a projection (17c) centrally between the resilient lips (17a, 17b), said projection being supported on a step (18b, 19b) of the lower lip (18a, 19a) of the groove (18, 19), the step running parallel to the lower side (11), and each resilient lip (17a, 17b) has a tip which interacts for locking purposes with an obliquely extending edge, wherein the boards (1, 2) are connected by substantially horizontal displacement (direction Q) towards each other, **characterized in that** the panels (1, 2) are floor panels with a core made of wood material, and **in that**, when the floor panels (1, 2) are connected to each other, the circumferential contour of the insert (17) is substantially completely surrounded by the core material of the panels (1, 2) and only the region within the resilient lips (17a, 17b) is recessed to form a transversely extending web of the insert (17).

2. Device according to Claim 1, **characterized in that** the tip extends obliquely with respect to the upper side (10) and lower side (11).

3. Device according to Claim 1 or 2, **characterized in that** the insert (17) is composed of plastic.

4. Device according to Claim 2, **characterized in that** the angle of inclination α between the obliquely extending edges (20a; 21a) is between 90° and 135°.

5. Device according to one or more of the preceding claims, **characterized in that** the insert (17) has a thickness of 1.5-5 mm.

6. Device according to one or more of the preceding claims, **characterized in that** the depth of penetration of the insert (17) into the groove (18, 19) is 3-8 mm.

7. Device according to Claim 3, **characterized in that** the modulus of bending of the plastic is 1000-7000 N/mm².

8. Device according to Claim 1, **characterized in that** the board (1, 2) is provided on one side edge (I) with a tongue (13) pointing substantially in the transverse direction (Q) and is provided on the other side edge (II) with a groove (14) corresponding thereto.

9. Device according to Claim 8, **characterized in that** the side edges of the insert (17) are rounded.

10. Device according to one or more of the preceding claims, **characterized in that** the insert (17) is inserted into a groove (18, 19) at the factory.

11. Device according to Claim 10, **characterized in that** the insert (17) is connected nonreleasably to the one groove (18, 19).

12. Device according to Claim 11, **characterized in that** the insert (17) is adhesively bonded.

13. Device according to Claim 1, **characterized in that** the grooves (18, 19) are cut with a stationary tool past which the floor panels (1, 2) are guided.

## Revendications

1. Dispositif composé de panneaux et d'un insert pour l'assemblage et le verrouillage de panneaux (1, 2) avec une face supérieure (10) et une face inférieure (11), qui sont munis chacun sur au moins deux bords latéraux (I, II) reposant l'un contre l'autre d'une seule rainure (18, 19) présentant chacune une lèvre inférieure (18a, 19a), avec un insert (17) prévu pour le verrouillage au moins dans la direction transversale Q, lequel est construit à partir d'un noyau s'étendant dans la direction transversale Q, qui est engagé dans la rainure (18 ou 19) d'une des bords latéraux (I, II) et dont s'écarte à chaque extrémité, dirigée vers la face inférieure, une lèvre élastique (17a, 17b) qui forme un retour s'étendant vers le milieu de l'insert, lequel insert présente en outre de façon centrée entre les lèvres élastiques (17a, 17b) une saillie (17c) s'appuyant sur un talon (18b, 19b) de la lèvre inférieure (18a, 19a) de la rainure (18, 19) courant parallèlement à la face inférieure (11) et présente sur chaque lèvre élastique (17a, 17b) un bec coopérant avec une arête oblique pour effectuer le verrouillage, dans lequel la liaison des plaques (1, 2) résulte d'un mouvement l'une vers l'autre sensiblement horizontal (selon la direction Q),
**caractérisé en ce que** les panneaux (1, 2) sont des panneaux de plancher avec un noyau en matériau à base de bois et **en ce que**, pour des panneaux de plancher (1, 2) assemblés entre eux, le profil périphérique de l'insert (17) est quasi-intégralement entouré par le matériau de noyau des panneaux (1, 2) et seule est évidée la région située à l'intérieur des lèvres élastiques (17a, 17b) transversalement au chemin de l'insert (17).

2. Dispositif selon la revendication 1, **caractérisé en ce que** le bec présente un profil oblique vis à vis de la face supérieure (10) ou respectivement de la face inférieure (11).

3. Dispositif selon l'une quelconque des revendications 1 ou 2, **caractérisé en ce que** l'insert (17) est en matière plastique.

4. Dispositif selon la revendication 2, **caractérisé en ce que** l'angle d'inclinaison α des profils obliques des arêtes (20a, 21a) est compris entre 90° et 135°.

5. Dispositif selon une ou plusieurs des revendications précédentes, **caractérisé en ce que** l'épaisseur de l'insert (17) est comprise entre 1,5 m et 5 mm.

6. Dispositif selon une ou plusieurs des revendications précédentes, **caractérisé en ce que** la profondeur de pénétration de l'insert (17) dans les rainures (18, 19) est comprise entre 3 et 8 mm.

7. Dispositif selon la revendication 3, **caractérisé en ce que** le module de flexion du plastique est compris entre 1000 et 7000 N/mm².

8. Dispositif selon la revendication 1, **caractérisé en ce que** la plaque (1, 2) est munie sur un bord latéral (I) d'une languette pointant sensiblement dans la direction transversale (Q) et sur l'autre bord latéral (II) d'une rainure (14) qui y correspond.

9. Dispositif selon la revendication 8, **caractérisé en ce que** les bords latéraux de l'insert (17) sont arrondis.

10. Dispositif selon une ou plusieurs des revendications précédentes, **caractérisé en ce que** l'insert (17) est monté en usine dans une des rainures (18, 19).

11. Dispositif selon la revendication 10, **caractérisé en ce que** l'insert (17) est fixé de façon indémontable dans la rainure (18, 19).

12. Dispositif selon la revendication 11, **caractérisé en ce que** l'insert (17) est collé.

13. Dispositif selon la revendication 1, **caractérisé en ce que** les rainures (18, 19) sont découpée avec un outil fixe, sur lequel sont déplacés les panneaux de plancher (1, 2).
